# EUROPEAN PATENT SPECIFICATION

(11) **EP 1 690 469 B1**
(45) Date of publication and mention of the grant of the patent: **25.10.2017**
(21) Application number: 04818878.3
(22) Date of filing: 15.11.2004
(51) Int. Cl.: A46B 3/06, A46B 3/18

(54) **RESIN TWISTED BRUSH**
VERDRILLTE BÜRSTE AUS KUNSTSTOFF
BROSSE DE TORSION EN RESINE

(30) Priority: 18.11.2003 JP 2003388512
(43) Date of publication of application: 16.08.2006
(73) Proprietor: Takahashi, Atsushi, Tsuruga-shi, Fukui 914-0814 (JP)
(72) Inventor: Takahashi, Atsushi, Tsuruga-shi, Fukui 914-0814 (JP)
(74) Representative: Becker Kurig Straus
(86) International application number: PCT/JP2004/016930
(87) International publication number: WO 2005/048771

(56) References cited:
- GB-A- 2 085 718
- JP-A- 5 317 123
- JP-A- H05 317 123
- JP-A- 2000 253 931
- US-A- 3 124 823
- US-A- 5 699 578

## Description

### TECHNICAL FIELD

The present invention relates to the fact that the plaque which adheres to the tooth surface and periodontal tissues provides a breeding ground for bacteria which cause tooth decay and pyorrhea, two main causes for the loss of teeth. The present invention is directed to an oral cleaning device optimum for controlling plaque between adjacent teeth, a particular cause of periodontal disease, a mascara brush used for making up eyelashes (cilia), and the like, as well as a small size twisted brush optimum for cleaning or polishing a curved complicated shaped small-diameter pipe or the like.

### Background Technology

In general, the two major diseases causing the loss of teeth are caries and pyorrhea; in particular, for cases of gingival recession due to periodontal disease are not susceptible to interdental plaque control by a common toothbrush, resulting in the need for extensive use of an oral cleaning device such as an interdental brush. A typical cleaning device, an interdental brush, is a twisted brush with nylon bristles arranged concentrically around a twisted metal filament, but these types have been plagued with numerous problems which limit their habitual adoption for oral care: when the tip [of the brush] kits the gum during an interdental insertion, it often injures the gum; it causes a discomfort when the metal tip touches the tooth; repeated use during cleaning causes a high of breakage of the twisted metal filament due to metal fatigue. When a cleaning is performed between three-dimensionally concaved, complicated teeth, such as in a root branching site, the metal which constitutes the interdental brush stem not only resists insertion causing problems, but also suffers from the risk of leaving un-cleaned sections if the cleaning brush is pre-curved to accommodate its insertion. The use of a shape memory nickel titanium alloy is conceivable for avoiding this problem, but if a shaping method similar to that used for a twisted brush is involved, the de-twisting of the metal filament will end up causing nylon bristles to fall out. Therefore, resin materials have been studied as materials to constitute the stem; but since the interdental brush requires the brush section to penetrate through a 0.8 mm diameter space for cleaning interdentally, it has been difficult to injection mold so as to insert nylon bristles into a resin material of this diameter. Other methods include electrostatically implanting nylon piles in the radial direction into a shape memory metal filament rod or a resin filament rod, but it is necessary for the diameter of the stem for penetration of the brush section into a 0.8 mm diameter space to be about 0.4 mm or less. It has been difficult to uniformly implant nylon bristles about 2mm to about 4mm in total length into a filament rod of this diameter and, in addition, to find an adhesive with no biological hazard so as to prevent the loss of bristles. Applications for such small twisted brushes also includes cosmetic tools such as cosmetic mascara brushes and the like, where basically the stem material has been a metal material.

In addition, this type of twisted shape brush is also used for polishing or cleaning various pipe-shaped items, but use in a complex curved section gave no choice but to connect a supple material to the handle if made of metal because the depth of penetration was limited.

GB 2 085 718 A discloses a brush construction comprising one or more twisted wires having fixed filaments between turns of the wire or wires, the wire or wires having an electrically insulated, wear-resistant and elastic layer thereon.

US 3 124 823 A discloses a stem brush comprising two stem wires having a layer of bristles interposed there between, such stem wires being twisted tightly together as shown to grip the brush material and dispose the latter in a generally helical layer. The stem wires will ordinarily be steel wire although other materials such as brass, stainless steel and aluminum wire may be utilized.

JP H05 317 123 A discloses that thermoplastic resin having a melting point lower than that of bristles of a dental brush and a thermal deformation temperature higher than the temperature inside the mouth is coated on the outer surfaces of wires. The bristles are inserted between the wires and the wires are twisted together to plant the bristles. The coated resin is heated to melt and then cooled down to cure. An interdental brush is composed of this bristles.

US 5 699 578 A discloses a interdental cleaning device comprising two twisted, wire-type sections, wherein the cleaning is accompanied by the application of care and cleaning agents, that the wire-type sections are twisted in such a way that at least one free loop or eye is formed.

### DISCLOSURE OF THE INVENTION

### PROBLEMS TO BE SOLVED BY THE INVENTION

The present invention is defined by appended independent claims 1 and 4. Beneficial embodiments are provided in dependent claims 2 and 3. As described above, interdental plaque control is very useful. It is an object of the present invention to replace the conventional metal stem material with a material that gives an image of a soft sensation for providing an interdental auxiliary cleaning device, which, when used to insert the interdental cleaning device between drum[saddle]-shaped teeth for interdental oral cleaning, will not injure the gum with the tip of the cleaner of the core portion, which permits easy insertion without causing pain or discomfort simultaneously, permits insertion with no resistance between teeth having restriction in the insertion direction, like a maze or having a complicated root shape, maintains straightenability without any permanent deformation when the stem section is bent, allows close fitting to the three-dimensional interdental configuration so as to leave no uncleaned sections in the root interstices , causes little discomfort when coming into contact with the tooth or the gum during the cleaning operation, undergoes minimal breakdown upon repeated bending; and also for use in a cosmetic mascara brush without fear when used near the eyeball.

Other applications include replacing the stems themselves with a resilient, shape recoverable, and supple material for use in polishing and cleaning various pipe shaped goods with a complicated curved structure so as to permit a longer penetration depth.

### MEANS TO SOLVE THE PROBLEMS

In general, small size twisted brushes used for interdental brushes and the like require twisting a stainless filament or like metal which constitutes the stem portion, thereby clamping nylon bristles in place. The present invention, in order to replace the conventional interdental brush stem with a resin material having both optimum suppleness and straightenability (shape recovery), involves, as in the case of a conventional metal interdental brush manufacturing step, the clamping of nylon bristles in a perpendicular direction between two pieces of resin material and twisting one end, while holding the other, thereby clamping and generating a twisted brush using a resin material. However, it is difficult for the stem resin material to maintain its twisted configuration, and also to provide suppleness and shape recoverability such as straightenability and the like which are the desired properties of the initial objective. Therefore, the present invention is directed to a small-diameter resin twisted brush constructed by arraying two pieces of resin filament material and thermally fusible resin filaments in parallel thereto, heat-treating at any stage before, during or after a step of clamping radially-projecting filaments (fibers) in the stem filaments rods and twisting so as to form a twisted brush shape, thereby melting only the thermally fusible resin to mutually fuse the two pieces of resin material themselves that form a stem member with the radially-projecting filaments (fibers) such as nylon bristles , and fuse-fixating the de-twisting stress of the stem member resin materials, so that the brush can maintain the twisted brush configuration with the radially-projecting filaments (fibers) clamped preventing the bristles from falling out.

The above means provide the functions given below

### ADVANTAGEOUS EFFECTS OF THE INVENTION

The small-diameter resin twisted brush as set forth in Claims 1 to 5 reduces any fear when used near the eyeball as in a mascara brush because the stem is not made of metal as in the case of conventional twisted brushes; there is neither any discomfort due to a galvanic electric current between the saliva and the metal when used orally nor worry of metal-induced allergy when used for a long period of time.

Further, as the brush structure is the same as that of the conventional twisted brush, the bristle performance is not lost, and it is possible to take advantage of the features of each resin material, thereby resulting in the excellent effects of imparting suppleness not present in the conventional metal twisted brush, maintaining straightenability due to the shape recoverability immediately after use under bent and deformed conditions, and providing a soft use comfort.

Similarly, this twisted brush is made of a resilient, shape recoverable, supple, resin material of similar properties for the stem itself, so that the entire brush from the tip to the extended holder section is resilient, shape recoverable (straightenable), and supple, enabling one to respond to a cleaning or polishing operation of a variety of pipe shaped goods regardless of complicatedly curved shapes at a deeper penetration depth.

### THE BEST EMBODIMENT FOR CARRYING OUT THE INVENTION

Hereafter, the embodiments of the present invention are explained with reference to the attached drawings.

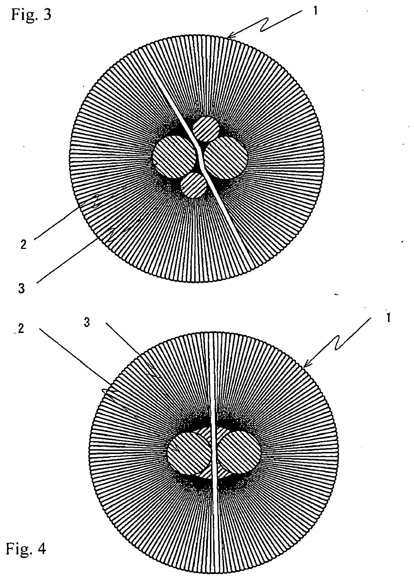

Figures 1-8 are examples of manufacturing steps and embodiments for working the invention; in these figures, like symbols represent like objects where the basic construction is similar to that of the conventional one shown in the drawings.

As shown in Figure 1, multiple radially-projecting resin filaments (fibres) 1 are arrayed, parallel to, and clamped by, stem resin filament rods 2 with thermally fusible resin filament rods 3 parallel thereto. Figure 2 shows the way the assembly is viewed from the stem direction. In this condition, twisting by holding the stem tip portion 4 and tip rear end 5 causes the radially-projecting resin filaments (fibres) 1 to become helically oriented around the stem as the centre axis of a concentric circle, as shown in Figure 3, giving rise to a twisted brush shape. Heat treating the entire assembly while the above state is maintained melts only the thermally fusible resin filament rods 3 as in Figure 4, thereby fusing each of the radially-projecting resin filaments (fibres) 1 which constitute the bristles with the two or more resin filament rods 2, generating a small-diameter resin twisted brush as shown in Figure 5 which maintains a twisted brush shape which prevents the bristles from falling out, prevents the resin filament rods that constitute the twisted stem portion from twisting, and which has helical bristles. In this case, the timing for the heat treatment may be during or before the twisting step. In order to shorten the time required to retain each twisted brush of the stem tip 4 and stem rear end 5 until the heat treated thermally fusible resin filament rods 3 have cooled and solidified, any number of twisted brush [units] may have the radially-projecting resin filaments (fibres) positioned at fixed intervals flanked by sections lacking stem bristles, (Fig. 6) and then be twisted and heat treated, thereby permitting production efficiency to be enhanced.

Since the cut surface is expected to have sharp edges, it is preferred to subject the stem tip section 4 to ultrasonic, radio frequency or machining treatment to remove these edges for gaining a smooth shape.

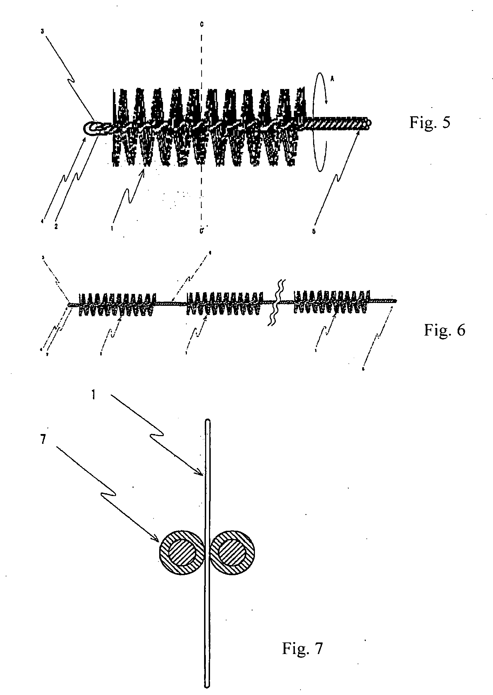

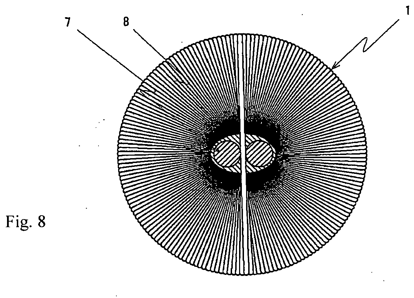

As shown in Figure 7, construction of the radially-projecting resin filaments (fibers) 1 with thermally fusible resin-coated resin filament rods 7, and heat treating during, before, or after the twisting step, fuses, as shown in Figure 8, only the thermally fusible resin portion of the thermally fusible resin-coated resin filament rods 7, thereby fusing together the radially-projecting resin filament rods (fibers) 1 with the resin filament rods 2 that constitute the core portion of the thermally fusible resin-coated resin filament rods 7, thereby maintaining a twisted brush shape which prevents the bristles from falling out, prevents the resin filament rods which constitute the twisted stem portion from twisting, and which forms the helical bristles.

The resultant small-diameter resin twisted brush, when used by connecting it to the motion shaft of an electrical interdental cleaning device that generates a sliding motion, a rotating motion, or a rotary-sliding motion as in Japanese Patent Applications 2000-380686 and 2001-230207 or in a manual interdental cleaning device. Incidentally, the small-diameter resin twisted brush of this invention is not limited to the above manufacturing steps and embodiments so that a variety of modifications may obviously be made within the scope of the present invention, as for the resin rods used for the stem, the number of the thermally fusible resin filament rods, the materials and array conditions of the radially-projecting resin filaments (fibers) (in terms of arrays in a bundled state or the array intervals), the inclusion of polishing particles, use of metal, and the like.

### POTENTIAL UTILITY IN INDUSTRY

The small-diameter resin twisted brush of this invention which does not use metal in the stem section, will be free of any discomfort due to a galvanic current between the saliva and metal nor is any concern about metal-induced allergy, when used as an oral cleaning device, as an interdental brush for control of the plaque between teeth which can cause periodontal disease; and while structurally it is the same as a conventional twisted tooth brush, the stern is provided with enough suppleness, maintains straightenability (shape recoverability) immediately after use in a bent or deformed situation, suffers only rarely stress fatigue due to repetitious use; thereby there is less chance of breakage, giving rise to a highly durable interdental brush. These feature may be taken advantage of and suitably used as a tip brush for connection to the motion shaft of an electrical interdental cleaning device that generate a sliding motion, a rotating motion, or rotary-sliding motion as in Japanese Patent Applications 2000-380686 and 2001-230207. Furthermore, this metal-free twisted brush permits a cleaning, polishing, or coating operation of a complicated shape site which has been difficult for a conventional metal twisted brush, by making it possible not only to take advantage of the characteristics of the resin stem section, but also to reach a further deeper penetration depth than a conventional metal twist brush, which permits cleaning and polishing operations for parts such as machine parts with a complicates shape that have been impossible to clean, leaving no uncleaned comers.

Unlike a metal twisted brush with the hard sensation image of metal, the resin soft sensation reduces fear and thus provides comfort when used in front of the eye such as a for a mascara brush used for an eyelash cosmetic.

### BRIEF DESCRIPTION OF THE DRAWINGS

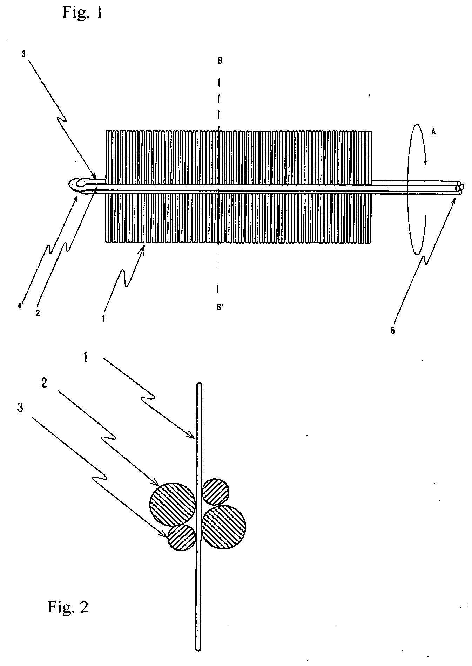

Figure 1
   A figure showing the way the radially-projecting resin filaments (fibers) uniformly arranged in parallel are clamped in a perpendicular crossing direction with the resin filament rods and thermally fusible resin filament rods.
Figure 2
   A figure showing the B-B' cut stem direction of Figure 1.
Figure 3
   A C-C' cross-section of Figure 5 showing the way the radially-projecting resin filaments (fibers) uniformly arranged in parallel are clamped in a perpendicular crossing direction with the resin filament rods and thermally fusible resin filament rods.
Figure 4
   A C-C'cross-section of Figure 5 illustrating the way a twisted brush with radially-projecting resin filaments (fibers) is formed by holding the stem tip while twisting the stem rear end.
Figure 5
   A cross-section in the stem direction showing the way the thermally fusible resin has melted and bonded by super [sic] heating while a twisted brush with radially-projecting resin filaments (fibers) is formed and held by holding the stem tip while twisting the stem rear end.
Figure 6
   A figure showing the way twisted brushes are formed continuously at fixed intervals so as to shorten the time for cooling and holding per piece for enhanced production efficiency.
Figure 7
   A figure showing the way the radially-projecting resin filaments (fibers) uniformly arranged in parallel are clamped In a perpendicular crossing direction the thermally fusible resin-coated resin filament rods.
Figure 8
   A cross-section in the stem direction showing the way the thermally fusible resin has melted and bonded by super [sic] heating while a twisted brush with radially-projecting resin filaments (fibers) is formed and held by holding the stem tip of the thermally fusible resin-coated resin filament rods while twisting the stem rear end.

### DESCRIPTION OF REFERENCE SYMBOLS

1. Radially-projecting resin filament rods (fibers)
2. Resin filament rod
3. Thermally fusible resin filament rod
4. Stem tip
5. Stem rear end
6. Portions lacking stem bristles
7. Thermally fusible resin-coated resin filament rod
8. Thermally fusible filament resin melt-deformed bonded portion

## Claims

1. A method of manufacturing a small-diameter resin twisted brush, the method comprising:
a) arraying multiple radially-projecting resin filaments (1) in parallel;
b) clamping said resin filaments (1) by two or more stem resin filament rods (2) with thermally fusible resin filament rods (3) parallel thereto;
c) twisting by holding a stem tip portion (4) and a stem rear end (5) which causes the radially-projecting resin filaments (1) to become helically oriented around the stem as the center axis of a concentric circle;
d) heat treating the entire assembly either after step c) while the above state is maintained, or during or before step c), to melt only the thermally fusible resin filament rods (3), thereby fusing each of the radially-projecting resin filaments (1) which constitute the bristles with the two or more stem resin filament rods (2), and
e) generating a small-diameter resin twisted brush which maintains a twisted brush shape which prevents the bristles from falling out.

2. The method of claim 1, wherein step a) comprises positioning the radially-projecting resin filaments (1) at fixed intervals flanked by sections (6) lacking stem bristles.

3. The method of any of claims 1 or 2, wherein the small-diameter metal-free brush stem tip portion (4) is subjected to ultrasonic, radio frequency or a machining treatment, thereby removing sharp edges generating a smoothened shape, thereby facilitating brush insertion.

4. A small-diameter resin twisted brush obtained by a method according to any of claims 1-3.

## Patentansprüche

1. Verfahren zur Herstellung einer verdrehten Kunstharzbürste mit kleinem Durchmesser, wobei das Verfahren umfasst:
a) parallel Anordnen einer Vielzahl von sich radial erstreckenden Kunstharzfilamenten (1);
b) Einklemmen der Kunstharzfilamente (1) durch zwei oder mehr StammKunstharzfilamentstäbe (2), wobei durch Wärme verschmelzbare Kunstharzfilamentstäbe (3) parallel dazu sind;
c) Verdrehen durch Halten eines Stammspitzenabschnitts (4) und eines Stammrückenendabschnitts (5), was dazu führt, dass die sich radial erstreckenden Kunstharzfilamente (1) spiralförmig um den Stamm als die Mittelachse eines konzentrischen Kreises orientiert werden;
d) Hitzebehandeln der gesamten Anordnung entweder nach Schritt c) während der obige Zustand beibehalten wird oder während oder vor Schritt c), um nur die durch Wärme verschmelzbaren Kunstharzfilamentstäbe (3) zu schmelzen, wodurch jedes der sich radial erstreckenden Kunstharzfilamente (1), die die Borsten darstellen, mit den zwei oder mehr StammKunstharzfilamentstäben (2) verschmolzen wird, und
e) Erzeugen einer verdrehten Kunstharzbürste mit kleinem Durchmesser, die eine verdrehte Bürstenform beibehält, was die Borsten davon abhält herauszufallen.

2. Verfahren gemäß Anspruch 1, wobei Schritt a) umfasst Positionieren der sich radial erstreckenden Kunstharzfilamente (1) in festen Abständen flankiert von Teilen (6), die keine Stammborsten aufweisen.

3. Verfahren gemäß Anspruch 1 oder 2, wobei der metallfreie Bürstenstammspitzenabschnitt (4) mit kleinem Durchmesser einer Ultraschall-, Radiofrequenz- oder maschinellen Bearbeitungsbehandlung ausgesetzt wird, wodurch scharfe Kanten entfernt werden und eine sanfte Form erzeugt wird, wodurch das Einführen der Bürste erleichtert wird.

4. Verdrehte Kunstharzbürste mit kleinem Durchmesser erhalten durch ein Verfahren gemäß irgendeinem der Ansprüche 1-3.

## Revendications

1. Procédé de fabrication d'une brosse torsadée en résine de petit diamètre, le procédé comprenant :
a) la mise en rangées de multiples filaments (1) de résine en saillie radiale en parallèle ;
b) le serrage desdits filaments de résine (1) par deux ou plusieurs tiges (2) de filaments en résine du manche, avec des tiges (3) de filament en résine thermofusible parallèles à celles-ci ;
c) le tordage en maintenant une partie d'embout de manche (4) et une partie arrière de manche (5), ce qui fait que les filaments (1) en résine en saillie radiale deviennent orientés de façon hélicoïdale autour du manche en tant que l'axe central d'un cercle concentrique ;
d) traitement thermique de la totalité de l'ensemble soit après l'étape c) tandis que l'état ci-dessus est maintenu ou pendant ou avant l'étape c), pour fondre uniquement les tiges (3) de filament en résine thermofusible, fondant ainsi chacun des filaments (1) en résine en saillie radiale, ce qui constitue les poils avec les deux ou plusieurs tiges de filaments (2) en résine du manche, et
e) génération d'une brosse torsadée en résine de petit diamètre qui conserve une forme de brosse torsadée, ce qui évite que les poils ne tombent.

2. Procédé selon la revendication 1, dans lequel l'étape a) comprend le positionnement des filaments (1) en résine en saillie radiale à des intervalles fixes flanquées de sections (6) de poils de manche manquantes.

3. Procédé selon la revendication 1 ou 2, dans lequel la partie d'embout (4) de manche de brosse sans métal de petit diamètre est soumise à un traitement aux ultrasons, par fréquence radio ou d'usinage, retirant ainsi les bords vifs, générant une forme lisse facilitant ainsi l'insertion de la brosse.

4. Brosse torsadée en résine de petit diamètre obtenue par un procédé selon l'une quelconque des revendications 1 - 3.
